# FASCICULE DE BREVET EUROPEEN

(11) **EP 2 925 980 B1**
(45) Date de publication et mention de la délivrance du brevet: **07.12.2016**
(21) Numéro de dépôt: 13795818.7
(22) Date de dépôt: 22.10.2013
(51) Int. Cl.: F02B 77/11, B60R 13/08

(54) **GROUPE MOTOPROPULSEUR**
ANTRIEBSSTRANG
POWER TRAIN

(30) Priorité: 27.11.2012 FR 1261276
(43) Date de publication de la demande: 07.10.2015
(73) Titulaire: Peugeot Citroën Automobiles SA, 78140 Vélizy Villacoublay (FR)
(72) Inventeur: ROSE, Bruno, F-94200 Ivry Sur Seine (FR); VIDEMONT, Sebastien, F-94240 L'Hay les Roses (FR); LIAUZUN, Virginie, F-78117 Chateaufort (FR)
(74) Mandataire: Renous Chan, Véronique
(86) Numéro de dépôt international: PCT/FR2013/052518
(87) Numéro de publication internationale: WO 2014/083249

(56) Documents cités:
- EP-A2- 1 995 120
- WO-A1-2007/147631
- DE-U1-202004 015 698
- DE-U1-202010 013 507
- US-A1- 2009 197 044

## Description

L'invention concerne des groupes motopropulseurs, destinés notamment à équiper des véhicules du type automobile, et plus particulièrement les groupes motopropulseurs comprenant un moteur thermique. L'invention porte sur la protection thermique de l'environnement du moteur dans l'espace sous capot du véhicule.

En effet, l'environnement immédiat du moteur et des pièces/conduits/organes auxquels il peut être connecté, notamment à l'échappement, peut comporter des organes sensibles à la chaleur, comme des pièces en matériau plastique, des faisceaux électriques. Or, en fonctionnement, le moteur et les organes qui y sont connectés sont à très haute température, au-delà de 500°C. On prévoit donc généralement de coiffer le moteur d'un écran thermique, afin de protéger son environnement de la chaleur qu'il rayonne, de limiter les flux d'air chaud provenant du moteur et des organes/conduits qui lui sont associés.

Un tel écran thermique est par exemple connu du document WO 2007/147631 A1.

Dans la suite du présent texte, par soucis de concision, on pourra utiliser indifféremment le terme moteur pour désigner le moteur per se mais également le moteur et toutes les pièces/conduits/organes qui y sont connectés, notamment à l'échappement, et qui sont susceptibles, comme le moteur en fonctionnement, de présenter des surfaces extérieures à haute température dites surfaces chaudes.

Cet écran thermique est généralement à base de métal, et il épouse la forme du moteur qu'il doit isoler, en laissant un espace de quelques millimètres à quelques centimètres entre la paroi du moteur et celle de l'écran. Il est efficace vis-à-vis des organes susceptibles de détérioration thermique dans l'environnement moteur sous capot, en abaissant significativement la température à leur voisinage.

En revanche, il s'est avéré que ce type d'écran thermique pouvait, en confinant la chaleur dans la lame d'air entre l'écran et le moteur, contribuer à créer, ou à tout le moins amplifier, la création de points chauds sur le moteur, notamment au niveau du raccordement du moteur avec les collecteurs de gaz d'échappement ou au niveau de la turbine du turbocompresseur quand le moteur en est équipé. On comprend par « point chaud » une surchauffe locale d'une surface chaude du moteur ou de son organe/conduit associé à des températures par exemple supérieures à 650 °C voire 700 °C.

Or, en cas de fuite de fluide réfrigérant du système de refroidissement du moteur sous capot, cette fuite de liquide est capable, selon certaines configurations, de passer entre le moteur et l'écran thermique : si cette fuite atteint un point chaud, on risque la création de poches d'un mélange d'air et de fluide réfrigérant atteignant ou dépassant la température d'inflammabilité du liquide réfrigérant. Et le risque d'inflammation du fluide réfrigérant, même faible, doit être écarté. On comprend dans la présente invention par fluide réfrigérant un fluide qui peut se trouver, à température et pression ambiantes, sous forme gazeuse, et sous forme liquide dans les conditions de pression et d température d'utilisation dans les systèmes de refroidissement/ de climatisation. On comprend également sous ce terme tous les fluides, notamment les liquides de type huile, qui ne sont pas à fonction réfrigérante au sens strict et qui circulent également dans ces systèmes, fluides qui généralement associés dans ces systèmes à des fluides à fonction réfrigérante au sens strict, et qui peuvent aussi contribuer à augmenter un risque d'inflammation, notamment de ces fluides réfrigérants au sens strict.

L'invention a alors pour but d'améliorer la conception de ce type d'écran thermique, de façon à ce qu'il puisse à la fois continuer à protéger thermiquement l'environnement du moteur, mais également limiter/supprimer tout point chaud sur le moteur même, ou, à tout le moins, faire en sorte que ces points chauds restent en dessous d'une température-seuil.

L'invention a pour objet un groupe motopropulseur comprenant un moteur thermique et différents organes et/ou conduits connectés à celui-ci, dont des collecteurs d'échappement et/ou un turbocompresseur. Ledit groupe motopropulseur est équipé d'un écran thermique venant coiffer au moins une partie dudit moteur et au moins une partie desdits organes/conduits, ledit écran thermique étant muni de groupes d'ouvertures disposés à l'aplomb d'au moins les collecteurs d'échappement et/ou de la turbine du turbocompresseur. Chaque groupe comprend une pluralité d'ouvertures sous forme d'ouïes disposées côte à côté, et définissant chacune des fentes de forme allongée et un bord libre qui canalise l'air circulant depuis l'intérieur vers l'extérieur de l'écran thermique au-dessus ou vers l'avant du moteur en position de montage dans un véhicule.

L'invention a donc adapté la conception des écrans thermiques pour moteur, afin de réconcilier deux objectifs apparemment contradictoires, à savoir d'une part de protéger thermiquement l'environnement du moteur, et d'autre part, éviter une surchauffe locale dans la zone située entre l'écran et le moteur créant des points chauds à la surface du moteur. Selon l'invention, on a tout d'abord identifié les zones où les points chauds sont les plus susceptibles de se former ou de dépasser une température seuil qu'on peut considérer comme critique (par exemple vers 700 °C), dont la zone de raccordement des collecteurs d'échappement au moteur, où circulent les gaz d'échappement très chauds en sortie moteur, et la turbine du turbocompresseur. Puis on a ajouté des ouvertures à l'écran à l'aplomb de ces zones critiques thermiquement, mais de façon particulière, à savoir en prévoyant des groupes d'ouvertures allongées sous forme d'ouïes. Le fait de prévoir plusieurs ouvertures voisines plutôt qu'une seule présente au moins deux avantages : d'une part, les propriétés mécaniques de l'écran sont mieux préservées (rigidité conservée), d'autre part, on évite de créer une unique « grande » ouverture au-dessus d'une zone critique, ce qui pourrait endommager des pièces sensibles thermiquement disposées à proximité de l'écran par un rayonnement thermique, un flux d'air trop importants. A surfaces d'ouvertures totales égales dans l'écran, il s'est avéré plus intéressant, donc, de répartir les ouvertures en groupes d'ouvertures. Des ouvertures de forme allongée (plutôt que de forme cylindrique par exemple) permettent en outre de maximiser la section de passage d'air chaud. Enfin, choisir des ouvertures pratiquées dans l'écran sous forme d'ouïes permet d'utiliser très avantageusement le bord libre de l'ouïe pour canaliser l'air chaud vers le haut, afin de favoriser la circulation d'air chaud depuis le moteur par convection naturelle, et/ou vers l'avant du moteur, c'est-à-dire vers l'avant du véhicule quand le moteur est monté dans celui-ci, donc vers une zone généralement dépourvue de pièces sensibles thermiquement. Les ouvertures en forme d'ouïes sont obtenues sans retrait de matière : Elles sont obtenues à partir de l'écran plein, en pratiquant une fente et en soulevant un bord longitudinal au moins. On peut envisager aussi de soulever les deux bords longitudinaux, un au-dessus du plan (de l'enveloppe) de l'écran, et un au-dessous dudit plan. On peut ainsi, en choisissant l'orientation du ou des bords soulevés, faciliter le guidage de la circulation d'air depuis l'espace - interne - entre le moteur et l'écran vers l'espace - externe - au-delà de l'écran, entre écran et environnement sous capot du moteur. Ces ouvertures particulières peuvent être obtenues par des techniques connues en emboutissage.

On a mentionné comme surfaces chaudes la zone de jonction des collecteurs d'échappement en sortie moteur ou la turbine d'un turbocompresseur, de façon non limitative. On peut aussi y inclure, notamment, les équipements de dépollution montés juste en aval des collecteurs d'échappement sur ligne d'échappement.

Avantageusement, l'écran thermique comporte deux feuilles métalliques associées l'une à l'autre par une couche de matériau isolant thermique (par exemple un matériau fibreux en céramique). Alternativement, elle peut comporter une seule feuille métallique ou comporter un empilement de plus de deux feuilles métalliques chacune étant séparée de la feuille adjacente par une couche d'isolant. Alternativement, les feuilles métalliques peuvent être séparées par une simple lame d'air encapsulé entre lesdites feuilles. De préférence, l'écran thermique est formé d'un seul tenant.

Avantageusement, au moins un des groupes d'ouvertures, notamment l'ensemble des groupes d'ouvertures, comprend au moins 3 ouvertures.

Avantageusement, au moins une des ouvertures, notamment chaque ouverture, a une surface comprise entre 150 mm² et 500 mm².

De préférence, au moins une des ouvertures, notamment chaque ouverture, présente une forme allongée avec une longueur d'au moins 20 mm, notamment comprise entre 20 et 50 mm

De préférence, au moins une des ouvertures, notamment chaque ouverture, présente une forme allongée avec une largeur d'au moins 2mm, notamment comprise entre 2 et 6 mm.

Avantageusement, l'écran thermique présente une épaisseur comprise entre 0,5 mm et 2 mm.

Selon un mode de réalisation, l'écran thermique, à l'aplomb de la turbine du turbocompresseur, présente une forme partiellement cylindrique selon un axe longitudinal, les ouvertures de l'écran dans cette zone étant disposées radialement à sa surface et orientées substantiellement parallèlement audit axe.

Selon un mode de réalisation, l'écran thermique, à l'aplomb des collecteurs d'échappement, présente un groupe de plusieurs ouvertures substantiellement parallèles entre elles et décalées les unes par rapport aux autres longitudinalement.

De préférence, le système comporte des moyens de fixation de l'écran thermique sur le moteur Cela garantit une certaine étanchéité entre l'écran et le moteur, et limite les déperditions thermiques. Le mode de fixation peut être simple, par exemple à l'aide de vis serrées dans des bossages créés à cet effet dans le carter du moteur.

L'invention a également pour objet un véhicule embarquant un groupe motopropulseur tel que décrit plus haut.

L'invention est décrite plus en détail ci-après et en référence aux figures suivantes représentant schématiquement le moteur et son écran thermique dans un mode de réalisation non limitatif :
- La figure 1 présente schématiquement un éclaté de la portion de groupe motopropulseur et son écran thermique conforme à l'invention ;
- la figure 2 est une vue agrandie de l'écran thermique de la figure 1 selon l'invention ;
- la figure 3 est une vue en coupe de l'écran thermique des figures précédentes, dans la zone située à l'aplomb du turbocompresseur appartenant à la portion de groupe motopropulseur selon la figure 1.

Ces figures sont schématiques et les éléments représentés ne sont pas nécessairement à l'échelle afin d'en faciliter la lecture. Toutes les figures représentent les éléments dans leur position spatiale une fois montés sur un véhicule de type automobile sous capot.

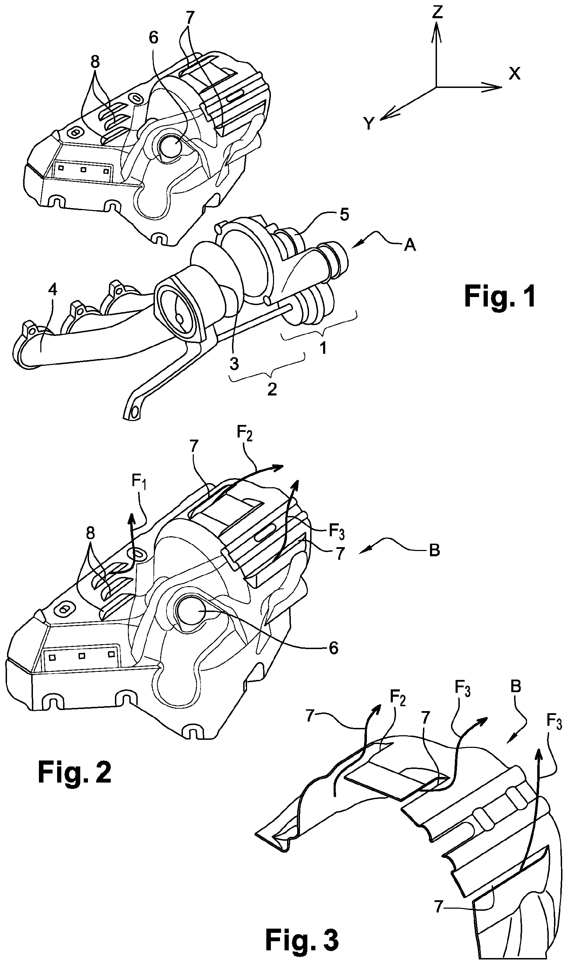

La figure 1 représente donc d'une part le moteur et ses organes associés représenté par la référence globale A et d'autre part l'écran thermique B qui est destiné à venir coiffer l'ensemble A. Le référentiel X,Y,Z reprend les conventions de l'automobile, avec X l'axe longitudinal du véhicule, Y son axe transversal et Z la verticale, le véhicule étant posé sur une surface plane et horizontale.

Le moteur et ses organes associés A comprennent, dans le cadre de la présente invention, le moteur 1 à proprement dit (définissant les chambres de combustion des trois cylindres que comprend le moteur), un turbocompresseur 2 muni d'une turbine 3 coiffée d'un carter de forme partiellement cylindrique, et trois collecteurs d'échappement 4 connectés respectivement à la sortie des trois cylindres. Sont également représentés les trois conduits d'admission d'air 5.

L'écran thermique B est donc destiné à coiffer l'ensemble des trois cylindres 1, des trois collecteurs d'échappement 4, et de la turbine 3 du turbocompresseur : il présente une forme qui vient épouser approximativement globalement la forme extérieure de ces organes, avec un facteur d'agrandissement qui permet de laisser un espace d'environ 10 mm entre écran et organes. Il est constitué de deux plaques de métal du type acier inox embouties, d'environ 0,3 mm d'épaisseur et associées l'une à l'autre par une couche d'isolant, pour former une épaisseur totale d'environ 1 mm. La première feuille de métal, dite interne, celle la plus proche du moteur, est destinée à réfléchir au mieux la chaleur émise par le moteur, la couche d'isolant participe au blocage de la chaleur, et la deuxième feuille de métal, dite externe, permet de diminuer la température de surface extérieure de l'écran pour protéger l'environnement immédiat de l'écran. Cet écran est muni éventuellement d'ouvertures comme l'ouverture cylindrique 6 destinée à permettre à des faisceaux électriques, par exemple, de traverser l'écran. Selon l'invention, l'écran B comprend aussi deux groupes d'ouvertures : le groupe 7 à l'aplomb de la turbine 3 du turbocompresseur, et le groupe 8 à l'aplomb des collecteurs d'échappement 4. Dans cette configuration de moteur, c'est en effet dans ces zones que le risque de créations de points chauds est le plus élevé.

La figure 2 et la figure 3 permettent de détailler ces ouvertures 7 et 8. Le groupe d'ouvertures 8 comprend trois ouvertures de type ouïes de forme allongée : ces ouvertures sont disposées sensiblement parallèlement les unes aux autres, et décalées légèrement selon leur axe longitudinal. Leurs bords libres, soulevés par rapport à la forme de l'écran dans la zone où elles se situent, sont orientés de façon à canaliser l'air chaud provenant de la zone entre moteur et écran vers le haut, en favorisant ainsi la circulation de l'air par convection naturelle, selon une direction indiquée par la flèche F1, selon l'axe Z. Les fentes ont une longueur d'environ 30 mm, une largeur d'environ 5 mm les bords libres ont une forme courbe, concave.

Le groupe d'ouvertures 7, comme détaillé également à la figure 3, se trouve à l'aplomb de la turbine 3 du turbocompresseur 2, dans la zone de l'écran qui a une forme partiellement cylindrique pour suivre la forme extérieure de la turbine (ou, plus exactement, de son carter). Ces ouvertures sont aussi au nombre de trois, toutes ont une forme allongée et sont disposées sensiblement parallèlement à l'axe longitudinal virtuel de cette zone partiellement cylindrique. Ces ouvertures sont distribuées radialement, elles sont également sous forme d'ouïes dont le bord libre canalise l'air chaud provenant de l'espace entre moteur et écran vers le haut, c'est-à-dire selon l'axe Z (flèche F3) et/ ou vers l'avant, c'est-à-dire selon l'axe X (flèche F2). Elles ont une longueur d'environ 40 mm, et une largeur d'environ 5 mm.

L'écran B est préférentiellement fixé au bloc moteur ou à la culasse. La fixation pourra par exemple être réalisée à l'aide de vis, au niveau de bossages créés sur le carter du moteur.

L'invention permet ainsi la protection thermique des accessoires disposés dans l'espace sous capot du véhicule en minimisant tout risque de surchauffe dangereuse entre écran et moteur. On écarte ainsi le risque que des poches d'air très chaud (au-delà de 700°C) ne se créent sous écran, qui pourraient entrer en contact avec un fluide inflammable comme un liquide réfrigérant par exemple.

Beaucoup de variantes peuvent permettre d'adapter l'écran selon l'invention aux différentes configurations possibles du moteur : ainsi, on peut supprimer un des groupes d'ouvertures si le moteur n'est pas équipé d'un turbocompresseur, en ajouter s'il est équipé à l'échappement de dispositifs de dépollution du type catalyseur d'oxydation qui peut monter à de très hautes températures également. On peut augmenter le nombre d'ouvertures par groupe, par exemple jusqu'à 5 à 8, en modifier le dimensionnement. On peut prévoir aussi d'aligner des ouvertures.

## Revendications

1. Groupe motopropulseur comprenant un moteur thermique et différents organes et/ou conduits connectés à celui-ci (A), dont des collecteurs d'échappement (4) et/ou un turbocompresseur (2), **caractérisé en ce qu'**il est équipé d'un écran thermique (B) venant coiffer au moins une partie dudit moteur et au moins une partie desdits organes/conduits, ledit écran thermique étant muni de groupes d'ouvertures (7,8) disposés à l'aplomb d'au moins les collecteurs d'échappement (4) et/ou de la turbine (3) du turbocompresseur (2), chaque groupe comprenant une pluralité d'ouvertures sous forme d'ouïes disposées côte à côté, et définissant chacune des fentes de forme allongée et un bord libre qui canalise l'air circulant depuis l'intérieur vers l'extérieur de l'écran thermique (B) au-dessus ou vers l'avant du moteur en position de montage dans un véhicule.

2. Groupe motopropulseur selon la revendication précédente, **caractérisé en ce que** l'écran thermique (B) comporte deux feuilles métalliques associées l'une à l'autre par une couche de matériau isolant thermique.

3. Groupe motopropulseur selon l'une des revendications précédentes, **caractérisé en ce qu'**au moins un des groupes d'ouvertures (7,8), notamment l'ensemble des groupes d'ouvertures, comprend au moins 3 ouvertures.

4. Groupe motopropulseur selon l'une des revendications précédentes, **caractérisé en ce qu'**au moins une des ouvertures, notamment chaque ouverture, a une surface comprise entre 150 mm² et 500 mm².

5. Groupe motopropulseur selon l'une des revendications précédentes, **caractérisé en ce qu'**au moins une des ouvertures, notamment chaque ouverture, présente une forme allongée avec une longueur d'au moins 20 mm notamment comprise entre 20 mm et 50 mm

6. Groupe motopropulseur selon l'une des revendications précédentes, **caractérisé en ce qu'**au moins une des ouvertures, notamment chaque ouverture, présente une forme allongée avec une largeur d'au moins 2 mm, notamment comprise entre 2 et 6 mm.

7. Groupe motopropulseur selon l'une des revendications précédentes, **caractérisé en ce que** l'écran thermique (B) présente une épaisseur comprise entre 0,5 mm et 2 mm.

8. Groupe motopropulseur selon l'une des revendications précédentes, **caractérisé en ce que** l'écran thermique (B), à l'aplomb de la turbine (3) du turbocompresseur (2), présente une forme partiellement cylindrique selon un axe longitudinal, les ouvertures (7) de l'écran dans cette zone étant disposées radialement à sa surface et orientées substantiellement parallèlement audit axe.

9. Groupe motopropulseur selon l'une des revendications précédentes, **caractérisé en ce que** l'écran thermique (B), à l'aplomb des collecteurs d'échappement (4), présente un groupe (8) de plusieurs ouvertures substantiellement parallèles entre elles et décalées les unes par rapport aux autres longitudinalement.

10. Véhicule embarquant un groupe motopropulseur selon l'une des revendications précédentes.

## Patentansprüche

1. Antriebsstrang, umfassend einen Verbrennungsmotor und verschiedenen Organe und/oder Leitungen, die mit diesem (A) verbunden sind, darunter Abgaskrümmer (4) und/oder ein Turbolader (2), **dadurch gekennzeichnet, dass** er mit einem Hitzeschild (B) ausgestattet ist, der mindestens einen Teil des Motors und mindestens einen Teil der Organe/Leitungen abdeckt, wobei der Hitzeschild mit Gruppen von Öffnungen (7, 8) ausgestattet ist, die vertikal zu mindestens den Abgaskrümmern (4) und/oder der Turbine (3) des Turboladers (2) angeordnet sind, wobei jede Gruppe eine Vielzahl von Öffnungen in Form von Lüftungsschlitzen umfasst, die Seite an Seite angeordnet sind, und jeweils Spalte mit verlängerter Form und einen freien Rand definieren, der die Luft kanalisiert, die vom Inneren hin zum Äußeren des Hitzeschilds (B) zirkuliert, unter oder hin zur Vorderseite des Motors in Montageposition in einem Fahrzeug.

2. Antriebsstrang nach dem vorhergehenden Anspruch, **dadurch gekennzeichnet, dass** der Hitzeschild (B) zwei Metallfolien umfasst, die miteinander durch eine Schicht aus thermisch isolierendem Material assoziiert sind.

3. Antriebsstrang nach einem der vorhergehenden Ansprüche, **dadurch gekennzeichnet, dass** mindestens eine der Gruppen von Öffnungen (7, 8), insbesondere die Gesamtheit der Gruppen von Öffnungen, mindestens 3 Öffnungen umfasst.

4. Antriebsstrang nach einem der vorhergehenden Ansprüche, **dadurch gekennzeichnet, dass** mindestens eine der Öffnungen, insbesondere jede Öffnung, eine Fläche aufweist, die zwischen 150 mm² und 500 mm² liegt.

5. Antriebsstrang nach einem der vorhergehenden Ansprüche, **dadurch gekennzeichnet, dass** mindestens eine der Öffnungen, insbesondere jede Öffnung, eine verlängerte Form mit einer Länge von mindestens 20 mm aufweist, insbesondere zwischen 20 mm und 50 mm.

6. Antriebsstrang nach einem der vorhergehenden Ansprüche, **dadurch gekennzeichnet, dass** mindestens eine der Öffnungen, insbesondere jede Öffnung, eine verlängerte Form mit einer Länge von mindestens 2 mm aufweist, insbesondere zwischen 2 mm und 6 mm.

7. Antriebsstrang nach einem der vorhergehenden Ansprüche, **dadurch gekennzeichnet, dass** der Hitzeschild (B) eine Dicke aufweist, die zwischen 0,5 und 2 mm liegt.

8. Antriebsstrang nach einem der vorhergehenden Ansprüche, **dadurch gekennzeichnet, dass** der Hitzeschild (B), vertikal zur Turbine (3) des Turboladers (2), eine teilweise zylindrische Form gemäß einer Längsachse aufweist, wobei die Öffnungen (7) des Schilds in diesem Bereich radial zu seiner Fläche angeordnet und im Wesentlichen parallel zu der Achse ausgerichtet sind.

9. Antriebsstrang nach einem der vorhergehenden Ansprüche, **dadurch gekennzeichnet, dass** der Hitzeschild (B), vertikal zu den Abgaskrümmern (4), eine Gruppe (8) von mehreren Öffnungen aufweist, die im Wesentlichen untereinander parallel und mit Bezug aufeinander in der Längsrichtung versetzt sind.

10. Fahrzeug mit einem Antriebsstrang nach einem der vorhergehenden Ansprüche.

## Claims

1. Power unit, comprising a heat engine and various components and/or pipes connected thereto (A), including exhaust manifolds (4) and/or a turbocompressor (2), **characterised in that** it is equipped with a heat screen (B) at least partly fitting on top of said engine and at least some of said components/pipes, said heat screen being provided with groups of openings (7, 8) disposed vertically in line with at least the exhaust manifolds (4) and/or the turbine (3) of the turbocompressor (2), each group comprising a plurality of openings in the form of apertures disposed side by side, and each defining elongate-shaped slots and a free edge that channels the air flowing from the inside to the outside of the heat screen (B) above or towards the front of the engine in the position of installation in a vehicle.

2. Power unit according to the preceding claim, **characterised in that** the heat screen (B) comprises two metal sheets associated with each other by a layer of thermally insulating material.

3. Power unit according to one of the preceding claims, **characterised in that** at least one of the groups of openings (7, 8), in particular all the groups of openings, comprises at least 3 openings.

4. Power unit according to one of the preceding claims, **characterised in that** at least one of the openings, in particular each opening, has a surface area of between 150 mm² and 500 mm².

5. Power unit according to one of the preceding claims, **characterised in that** at least one of the openings, in particular each opening, has an elongate shape with a length of at least 20 mm, in particular between 20 mm and 50 mm.

6. Power unit according to one of the preceding claims, **characterised in that** at least one of the openings, in particular each opening, has an elongate shape with a width of at least 2 mm, in particular between 2 and 6.

7. Power unit according to one of the preceding claims, **characterised in that** the heat screen (B) has a thickness of between 0.5 mm and 2 mm.

8. Power unit according to one of the preceding claims, **characterised in that** the heat screen (B), vertically in line with the turbine (3) of the turbocompressor (2), has a partially cylindrical shape along a longitudinal axis, the openings (7) in the screen in this region being disposed radially to its surface and oriented substantially parallel to said axis.

9. Power unit according to one of the preceding claims, **characterised in that** the heat screen (B), vertically in line with the exhaust manifolds (4), has a group (8) of a plurality of openings substantially parallel to one another and offset with respect to one another longitudinally.

10. Vehicle incorporating a power unit according to one of the preceding claims.
